# EUROPÄISCHE PATENTANMELDUNG

(11) **EP 4 378 605 A2**
(43) Veröffentlichungstag der Anmeldung: **05.06.2024**
(21) Anmeldenummer: 24170987.2
(22) Anmeldetag: 21.06.2021
(51) Int. Cl.: B21D 53/88

(54) **VERFAHREN ZUM VERBINDEN ZWEIER BAUTEILE, INSBESONDERE EINES MOTORS MIT EINEM GETRIE-BE, SOWIE BAUGRUPPE MIT EINER VERBINDUNG ZWISCHEN MOTOR UND GETRIEBE**

(62) Teilanmeldung aus: 21180561.9
(71) Anmelder: maxon international ag, 6072 Sachseln (CH)
(72) Erfinder: SCHELB, Marco, 79312 Emmendingen (DE); HERR, Patrick, 79183 Waldkirch (DE); KÄLBLE, Simon, 79211 Denzlingen (DE)
(74) Vertreter: Grünecker Patent- und Rechtsanwälte PartG mbB

(57) **Zusammenfassung**

Die vorliegende Erfindung betrifft ein Verfahren zum Verbinden eines Motors mit einem Getriebe, wobei zunächst eine form- und/oder kraftschlüssige Verbindung zwischen Motor und Getriebe hergestellt wird, indem ein motor- oder getriebeseitiges erstes Bauteil mit dem jeweils damit zu verbindenden motor- oder getriebeseitigen zweiten Bauteil verschraubt wird oder indem ein Presssitz zwischen den beiden Bauteilen hergestellt wird, und wobei zusätzlich anschließend mittels Verstemmen eine axiale Sicherung zwischen den beiden Bauteilen hergestellt wird, indem eine Lasche, die an dem ersten Bauteil ausgebildet ist, mittels eines Verstemmwerkzeugs in eine Ausnehmung hinein verformt wird, die an dem zweiten Bauteil ausgebildet ist.

## Beschreibung

Die vorliegende Erfindung betrifft ein Verfahren zum Verbinden eines Motors mit einem Getriebe gemäß Anspruch 1 sowie ein Verfahren zum Verbinden eines ersten Bauteils mit einem zweiten Bauteil nach dem Oberbegriff des unabhängigen Anspruchs 2.

Aus dem Stand der Technik sind zahlreiche Verfahren zum Verbinden zweier Bauteile und insbesondere zum Verbinden eines Motorflansches eines Elektromotors mit dem Hohlrad eines Getriebes bekannt. Übliche Verbindungen zwischen Flansch und Hohlrad werden bislang beispielsweise durch a) Pressen und Verschweißen am Außendurchmesser des Hohlrads, b) Pressen und Kleben, c) Verschrauben und Verschweißen am Außendurchmesser des Hohlrads, d) Verschrauben und Kleben, e) Pressen und Verstiften, oder f) Schrauben und Verstiften realisiert.

Ist die Verbindung höheren Belastungen ausgesetzt, wird in der Regel eine geschraubte Verbindung verwendet, die jedoch zusätzlich gegen Aufdrehen gesichert werden muss. Eine Möglichkeit, die Verschraubung zu sichern, ist die Verwendung von Klebstoff. Eine durch Verkleben realisierte Sicherung der Verschraubung ist unter manchen Einsatzbedingungen jedoch nicht geeignet. Beispielsweise versagen die verwendeten Klebstoffe bei extremen Tief- oder Hochtemperaturanwendungen. Auch im Hochvakuum kommen Klebstoffsicherungen an ihre Grenzen. Zudem kann die Verarbeitung des Klebstoffs aufwendig sein und der verwendete Klebstoff kann eventuell sowohl bei der Verarbeitung als auch im späteren Betrieb gesundheitsschädigend sein. Werden schweißbare Materialien verwendet, kann die Schraubensicherung durch Verschweißen realisiert werden, was jedoch optische Mängel wie Löcher, Lunker und Verfärbungen mit sich bringen kann.

Aus EP 3527853 A1 ist bekannt, dass ein Adapterflansch mittels Verstemmen, Verkleben oder Verschweißen an einem Hohlrad befestigt werden kann. Das Verfahren zum Befestigen mittels Verstemmen ist nicht im Detail beschrieben. Aus EP 0801456 A2 ist ein Verfahren bekannt, bei dem ein Motordeckel mit einem Flansch mittels Verstemmen mit einem rohrförmigen Elektromotorgehäuse verbunden wird. Das Verfahren erfordert jedoch eine sehr spezielle und aufwendig zu erzeugende Geometrie des Motordeckels.

Aufgabe der vorliegenden Erfindung ist es, ein einfach durchzuführendes und kostengünstiges Verfahren zum Verbinden zweier Bauteile, insbesondere zum Verbinden eines Motors mit einem Getriebe, anzugeben, das die oben genannten Nachteile vermeidet.

Die Aufgabe wird gelöst durch die Merkmale des unabhängigen Anspruchs 1.

Demnach liegt dann ein erfindungsgemäßes Verfahren zum Verbinden eines Motors mit einem Getriebe vor, wenn zunächst eine form- und/oder kraftschlüssige Verbindung zwischen Motor und Getriebe hergestellt wird, indem ein motor- oder getriebeseitiges erstes Bauteil mit dem jeweils damit zu verbindenden motor- oder getriebeseitigen zweiten Bauteil verschraubt wird oder indem ein Presssitz zwischen den beiden Bauteilen hergestellt wird, und wobei zusätzlich anschließend mittels Verstemmen eine axiale Sicherung zwischen den beiden Bauteilen hergestellt wird, indem eine Lasche, die an dem ersten Bauteil ausgebildet ist, mittels eines Verstemmwerkzeugs in eine Ausnehmung hinein verformt wird, die an dem zweiten Bauteil ausgebildet ist.

Das erfindungsgemäße Verfahren lässt sich einfach, schnell, sauber und kostengünstig durchführen. Es ist nicht notwendig, die beiden miteinander zu verbindenden Bauteile zuvor zu reinigen, wie es beispielsweise beim Verkleben erforderlich ist. Ein weiterer Vorteil liegt darin, dass auch nicht-schweißbare Materialien verwendet werden können. Auch müssen keine Klebstoffe eingesetzt werden.

Die Aufgabe wird alternativ gelöst durch die Merkmale des unabhängigen Anspruchs 2. Demnach liegt bei einem Verfahren zum Verbinden eines ersten Bauteils mit einem zweiten Bauteil, wobei mittels Verstemmen eine axiale Sicherung zwischen den beiden Bauteilen hergestellt wird, dann eine erfindungsgemäße Lösung der Aufgabe vor, wenn die axiale Sicherung zwischen den beiden Bauteilen hergestellt wird, indem eine Lasche, die an dem ersten Bauteil ausgebildet ist, mittels eines Verstemmwerkzeugs in eine Ausnehmung hinein verformt wird, die an dem zweiten Bauteil ausgebildet ist, wobei das zweite Bauteil eine Verzahnung aufweist, und wobei das Verstemmwerkzeug ebenfalls eine Verzahnung aufweist, die mit der Verzahnung des zweiten Bauteils beim Verstemmen nach Art einer Linearführung zusammenwirkt.

Das Verstemmwerkzeug wird beim Verstemmen entlang einer geometrischen Achse der Verzahnung des zweiten Bauteils geführt. Das erfindungsgemäße Verfahren kann dadurch besonders einfach und vor allem wiederholgenau und präzise durchgeführt werden. Es eignet sich insbesondere zur Verbindung von Bauteilen mit einer Außen- oder Innenverzahnung wie zum Beispiel das Hohlrad eines Getriebes.

Vorteilhafte Ausführungsformen der vorliegenden Erfindung sind Gegenstand der Unteransprüche.

Gemäß einer bevorzugten Ausführungsform der vorliegenden Erfindung ist vorgesehen, dass das Verstemmwerkzeug einen keilförmigen Endabschnitt aufweist, durch den die Lasche des ersten Bauteils in die Ausnehmung des zweiten Bauteils hineinverformt wird. Dadurch wird die Lasche bei einer axialen Bewegung des Verstemmwerkzeugs wiederholgenau und präzise entweder radial nach Außen oder radial nach Innen in die dafür vorgesehene Ausnehmung gedrängt.

Gemäß einer besonders bevorzugten Ausführungsform der vorliegenden Erfindung ist vorgesehen, dass ein vorgelagerter Abschnitt des zweiten Bauteils, der sich näher an dem zur Verbindung mit dem ersten Bauteil vorgesehenen axialen Ende des zweiten Bauteils befindet als die Ausnehmung des zweiten Bauteils, zumindest an einem an die Ausnehmung angrenzenden Ende mit einer Profilierung versehen ist, wobei das Material der Lasche beim Verstemmen in die Profilierung hinein verformt wird, sodass zusätzlich ein in Umfangsrichtung wirkender Formschluss zwischen den beiden Bauteilen hergestellt wird, der als Verdrehsicherung dient. Diese Ausführungsform eignet sich sowohl, um eine Verschraubung besonders sicher gegen ein Aufdrehen zu sichern. Sie eignet sich aber auch, wenn die beiden Bauteile weder miteinander verschraubt noch miteinander verpresst werden. Die beiden Bauteile können vor dem Verstemmen beispielsweise lediglich über eine Spielpassung zusammengesetzt werden, sodass die Verstemmung der Lasche die vollständige Sicherung, sowohl in axialer Richtung als auch in Umfangsrichtung, übernimmt.

Besonders bevorzugt handelt es sich bei der Profilierung des vorgelagerten Abschnitts dabei um eine Verzahnung.

Gemäß einer besonders bevorzugten Ausführungsform der vorliegenden Erfindung handelt es sich bei dem zweiten Bauteil um ein Hohlrad mit einer Innenverzahnung, wobei die Verzahnung des vorgelagerten Abschnitts eine Fortführung der Innenverzahnung des Hohlrads ist. Es ist jedoch auch denkbar, dass das zweite Bauteil eine Außenverzahnung aufweist. Vorzugsweise weist das zweite Bauteil jedoch eine Innenverzahnung auf.

Gemäß einer weiteren besonders bevorzugten Ausführungsform der vorliegenden Erfindung kann die Verzahnung des vorgelagerten Abschnitts zusammen mit der Innenverzahnung des Hohlrads hergestellt werden, indem der Innendurchmesser im Bereich des vorgelagerten Abschnitts kleiner gewählt wird als der Durchmesser des Kopfkreises der Innenverzahnung des Hohlrads. Die Verzahnung des vorgelagerten Abschnitts kann jedoch auch separat hergestellt werden.

Gemäß einer weiteren besonders bevorzugten Ausführungsform der vorliegenden Erfindung ist vorgesehen, dass das Verstemmwerkzeug einen konusförmigen Endabschnitt mit einer zur Verzahnung des vorgelagerten Abschnitts passenden Außenverzahnung aufweist, wobei das Verstemmwerkzeug zum Verstemmen axial in das Hohlrad eingeführt wird, und wobei das Material der Lasche durch den konusförmigen Endabschnitt beim Verstemmen radial nach Außen in die Verzahnung des vorgelagerten Abschnitts hinein verformt wird, sodass ein in Umfangsrichtung wirkender Formschluss zwischen den beiden Bauteilen hergestellt wird. Diese Ausführungsform eignet sich besonders, wenn das Hohlrad zur anderen Seite hin offen ist, so dass das Verstemmwerkzeug ohne Weiteres in das Hohlrad eingeführt werden kann. Das Verstemmwerkzeug ist bei dieser Ausführungsform einfach herzustellen. Es kann im Wesentlichen aus einer einfachen Welle mit einer Außenverzahnung bestehen, die zur besseren Führung vorzugsweise nicht nur am konusförmigen Endabschnitt sondern auch über einen längeren an den konusförmigen Endabbschnitt anschließenden Führungsabschnitt der Welle ausgebildet ist.

Gemäß einer weiteren bevorzugten Ausführungsform der vorliegenden Erfindung ist vorgesehen, dass die Ausnehmung des zweiten Bauteils ein Freistich ist. Dieser ist einfach herzustellen und bietet zusammen mit der Lasche eine einfache aber sichere axiale Sicherung.

Gemäß einer weiteren bevorzugten Ausführungsform der vorliegenden Erfindung ist vorgesehen, dass die Lasche ein hohlzylindrischer Vorsprung des ersten Bauteils ist, die vorzugsweise beim Verstemmen über den gesamten Umfang in die Ausnehmung des zweiten Bauteils hineinverformt wird. Eine durch einen hohlzylindrischen Vorsprung gebildete Lasche lässt sich ebenfalls leicht und kostengünstig herstellen.

Gemäß einer weiteren besonders bevorzugten Ausführungsform der vorliegenden Erfindung wird das erste Bauteil vor dem Verstemmen mit dem zweiten Bauteil verschraubt. Dadurch wird eine besonders sichere Verbindung zwischen den beiden Bauteilen erzeugt.

Dabei ist es von besonderem Vorteil, wenn ein zur Verschraubung dienendes Gewinde des zweiten Bauteils näher an dem zur Verbindung mit dem ersten Bauteil vorgesehenen axialen Ende des zweiten Bauteils liegt als der vorgelagerte Abschnitt des zweiten Bauteils, wobei der Innendurchmesser des Gewindes des zweiten Bauteils größer ist als der Innendurchmesser des vorgelagerten Abschnitts. Diese Ausführungsform trägt zu einer besonders kompakten Bauweise bei.

Gemäß einer weiteren besonders bevorzugten Ausführungsform der vorliegenden Erfindung ist vorgesehen, dass das Verstemmen mittels kraft-/wegüberwachter Presse ausgeführt wird. Über die Kraftverlaufskurve kann die Qualität und somit die korrekte Ausführung des Verfahrens überwacht werden, ohne dass zusätzlich zerstörende Prüfungen, wie zum Beispiel Aufsägen, Erzeugen eines Schliffbilds, Ermittlung der Auspresskraft oder des Verdrehmoments, notwendig sind.

Gemäß einer weiteren besonders bevorzugten Ausführungsform der vorliegenden Erfindung wird die form- und/oder kraftschlüssige Verbindung und die axiale Sicherung zwischen einem Motorflansch des Motors und einem Hohlrad des Getriebes hergestellt, so dass der Motorflansch das erste Bauteil bildet und das Hohlrad des Getriebes das zweite Bauteil bildet.

Die Erfindung stellt ferner eine Baugruppe umfassend einen Motor und ein mit dem Motor verbundenes Getriebe bereit, wobei die Verbindung zwischen Motor und Getriebe gemäß einem erfindungsgemäßen Verfahren hergestellt ist.

Ein Ausführungsbeispiel der vorliegenden Erfindung wird nachfolgend anhand von Zeichnungen näher erläutert.

Es zeigen:
- Figur 1:: einen Längsschnitt durch einen Motorflansch und ein damit zu verbindendes Hohlrad eines Getriebes vor dem Zusammenfügen der beiden Bauteile,
- Figur 2:: einen Längsschnitt durch den Motorflansch und das Hohlrad aus Figur 1 nach dem Verschrauben der beiden Bauteile,
- Figur 3:: die Ansicht aus Figur 2 mit einem durch das Hohlrad hindurch einzuführenden Verstemmwerkzeug,
- Figur 4:: die Ansicht aus Figur 2 bzw. 3 mit eingeführtem Verstemmwerkzeug und
- Figur 5:: die Ansicht aus Figur 4 mit noch weiter eingeführtem Verstemmwerkzeug.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

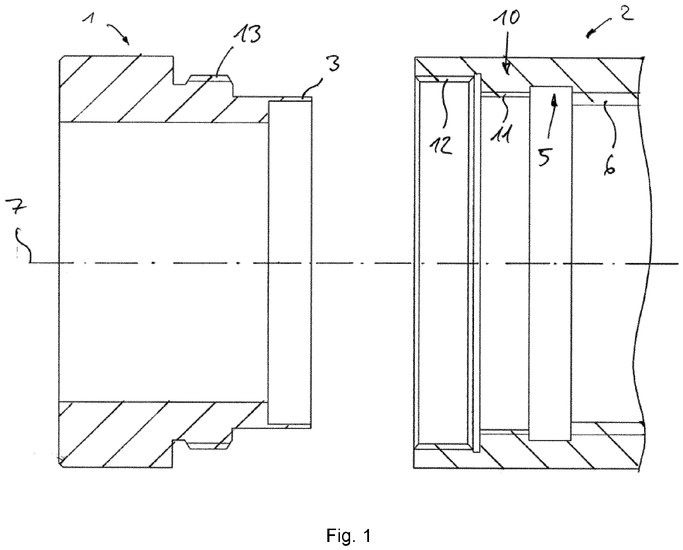

Figur 1 zeigt einen Längsschnitt durch zwei miteinander zu verbindende Bauteile, nämlich ein erstes Bauteil 1 und ein zweites Bauteil 2. Bei dem ersten Bauteil 1 handelt es sich um den Motorflansch eines Elektromotors. Das zweite Bauteil 2 ist das Hohlrad eines daran anzusetzenden Getriebes. Es verfügt in üblicher Weise über eine Innenverzahnung 6.

Die beiden Bauteile sind im wesentlichen rotationssymmetrisch ausgeführt und weisen eine gemeinsame geometrische Achse 7 auf. In einem 1. Schritt des erfindungsgemäßen Verfahrens werden die beiden Bauteile miteinander verschraubt. Der Motorflansch 1 weist zu diesem Zweck ein Außengewinde 13 auf, das Hohlrad 2 des Getriebes verfügt an seinem linken Ende über ein entsprechendes Innengewinde 12.

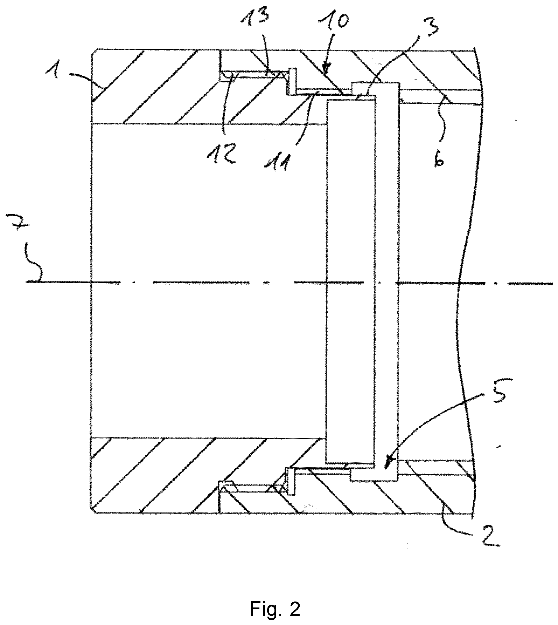

Figur 2 zeigt die Baugruppe nach dem Verschrauben der beiden Bauteile 1 und 2.

In einem zweiten Schritt wird die Verschraubung mittels Verstemmen gesichert. Der Motorflansch 1 weist zu diesem Zweck eine Lasche in Form eines hohlzylindrischen Vorsprungs 3 auf, die in eine entsprechende, als Freistich ausgeführte Ausnehmung 5 am Innenumfang des Hohlrads 2 hineinverformt wird.

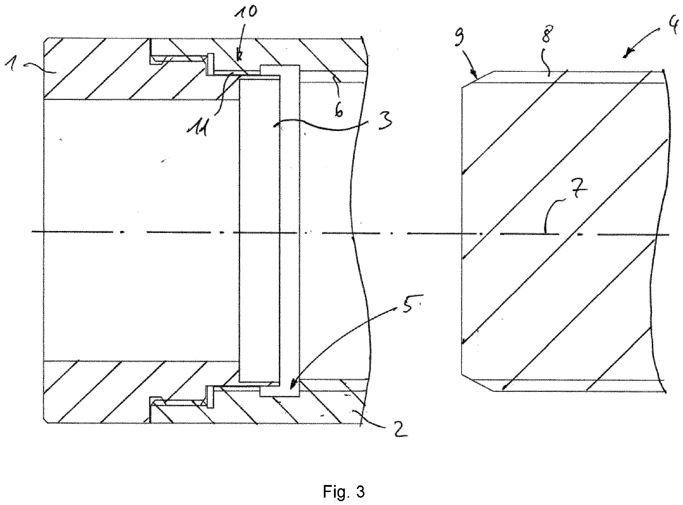

Zum Verstemmen kommt das in den Figuren 3, 4 und 5 dargestellte Verstemmwerkzeug 4 zum Einsatz. Das Verstemmwerkzeug 4 besteht im Wesentlichen aus einer einfachen Welle mit einer über die gesamte Länge bestehenden Außenverzahnung 8. Es kann von rechts in das Hohlrad 2 eingeführt werden. Die Außenverzahnung 8 des Verstemmwerkzeugs 4 wirkt dabei mit der Innenverzahnung 6 des Hohlrads nach Art einer Linearführung zusammen.

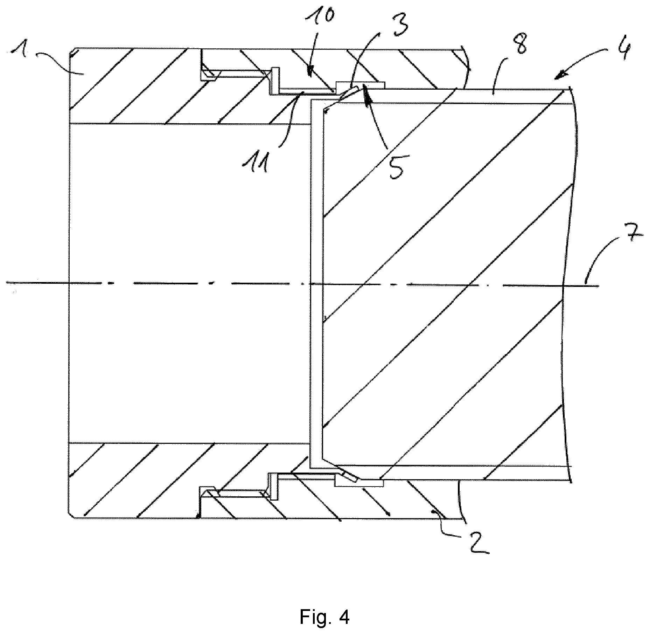

Das Verstemmwerkzeug 4 hat an seinem linken Ende einen konusförmigen Endabschnitt 9. Wie in Figur 4 zu erkennen ist, wird das Material der Lasche 3 durch den konusförmigen Endabschnitt 9 beim Verstemmen radial nach Außen in den Freistich 5 hinein verformt, wodurch eine axiale Sicherung erzeugt wird.

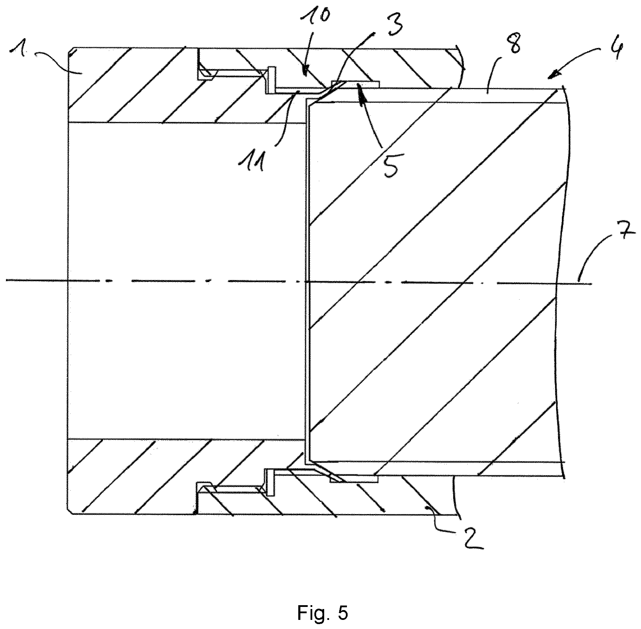

Wie insbesondere aus den Figuren 1 und 2 hervorgeht, ist ein vorgelagerter Abschnitt 10 des Hohlrads 2, der sich unmittelbar vor dem Freistich 5 und damit näher an dem Motorflansch 1 befindet als der Freistich 5, mit einer Profilierung in Form einer Innenverzahnung 11 versehen. Die Innenverzahnung 11 wird vorzugsweise zusammen mit der Innenverzahnung 6 des Hohlrads erzeugt und ist damit eine Fortführung der Innenverzahnung 6. Sofern das Verstemmwerkzeug 4 noch weiter nach links eingeführt wird als in Figur 4 dargestellt, so wird, wie in Figur 5 gezeigt, das Material der Lasche 3 durch den konusförmigen Endabschnitt 9 des Verstemmwerkzeugs 4 in die Innenverzahnung 11 des vorgelagerten Abschnitts 10 hinein verformt, sodass ein in Umfangsrichtung wirkender Formschluss zwischen den beiden Bauteilen hergestellt wird, der als zusätzliche Verdrehsicherung dient. Von besonderem Vorteil ist dabei, dass die zur Innenverzahnung 11 des vorgelagerten Abschnitts 10 passende Außenverzahnung 8 des Verstemmwerkzeugs 4 auch noch an dem konusförmigen Endabschnitt 9 besteht.

Für eine präzise und wiederholgenaue Durchführung des Verfahrens wird das Verstemmwerkzeug vorzugsweise mittels einer kraft-/wegüberwachter Presse geführt.

### Bezugszeichen

- 1: erstes Bauteil / Motorflansch
- 2: zweites Bauteil / Hohlrad
- 3: Lasche
- 4: Verstemmwerkzeug
- 5: Ausnehmung / Freistich
- 6: Verzahnung des zweiten Bauteils
- 7: Achse
- 8: Verzahnung des Verstemmwerkzeugs
- 9: keilförmiger / konusförmiger Endabschnitt
- 10: vorgelagerter Abschnitt
- 11: Verzahnung des vorgelagerten Abschnitts
- 12: Gewinde des zweiten Bauteils
- 13: Gewinde des ersten Bauteils

## Patentansprüche

1. Verfahren zum Verbinden eines Motors mit einem Getriebe, wobei zunächst eine form- und/oder kraftschlüssige Verbindung zwischen Motor und Getriebe hergestellt wird, indem ein motor- oder getriebeseitiges erstes Bauteil (1) mit dem jeweils damit zu verbindenden motor- oder getriebeseitigen zweiten Bauteil (2) verschraubt wird oder indem ein Presssitz zwischen den beiden Bauteilen (1, 2) hergestellt wird, und wobei zusätzlich anschließend mittels Verstemmen eine axiale Sicherung zwischen den beiden Bauteilen (1, 2) hergestellt wird, indem eine Lasche (3), die an dem ersten Bauteil (1) ausgebildet ist, mittels eines Verstemmwerkzeugs (4) in eine Ausnehmung (5) hinein verformt wird, die an dem zweiten Bauteil (2) ausgebildet ist.

2. Verfahren zum Verbinden eines ersten Bauteils (1) mit einem zweiten Bauteil (2), wobei mittels Verstemmen eine axiale Sicherung zwischen den beiden Bauteilen (1, 2) hergestellt wird, wobei das Verfahren insbesondere nach Anspruch 1 durchgeführt wird, **dadurch gekennzeichnet, dass** die axiale Sicherung zwischen den beiden Bauteilen (1, 2) hergestellt wird, indem eine Lasche (3), die an dem ersten Bauteil (1) ausgebildet ist, mittels eines Verstemmwerkzeugs (4) in eine Ausnehmung (5) hinein verformt wird, die an dem zweiten Bauteil (2) ausgebildet ist, wobei das zweite Bauteil (2) eine Verzahnung (6) aufweist, und wobei das Verstemmwerkzeug (4) ebenfalls eine Verzahnung (8) aufweist, die mit der Verzahnung (6) des zweiten Bauteils (2) beim Verstemmen nach Art einer Linearführung zusammenwirkt.

3. Verfahren nach Anspruch 2, **dadurch gekennzeichnet, dass** das Verstemmwerkzeug (4) einen keilförmigen Endabschnitt (9) aufweist, durch den die Lasche (3) des ersten Bauteils (1) in die Ausnehmung (5) des zweiten Bauteils (2) hineinverformt wird.

4. Verfahren nach einem der Ansprüche 1 bis 3, **dadurch gekennzeichnet, dass** ein vorgelagerter Abschnitt (10) des zweiten Bauteils (2), der sich näher an dem zur Verbindung mit dem ersten Bauteil (1) vorgesehenen axialen Ende des zweiten Bauteils (2) befindet als die Ausnehmung (5) des zweiten Bauteils (2), zumindest an einem an die Ausnehmung (5) angrenzenden Ende mit einer Profilierung (11) versehen ist, wobei das Material der Lasche (3) beim Verstemmen in die Profilierung (11) hinein verformt wird, sodass zusätzlich ein in Umfangsrichtung wirkender Formschluss zwischen den beiden Bauteilen (1, 2) hergestellt wird, der als Verdrehsicherung dient.

5. Verfahren nach Anspruch 4, **dadurch gekennzeichnet, dass** es sich bei der Profilierung (11) des vorgelagerten Abschnitts (10) um eine Verzahnung handelt.

6. Verfahren nach Anspruch 5, **dadurch gekennzeichnet, dass** das zweite Bauteil (2) ein Hohlrad mit einer Innenverzahnung (6) ist, wobei die Verzahnung (11) des vorgelagerten Abschnitts (10) eine Fortführung der Innenverzahnung (6) des Hohlrads (2) ist.

7. Verfahren nach Anspruch 6, **dadurch gekennzeichnet, dass** die Verzahnung (11) des vorgelagerten Abschnitts (10) zusammen mit der Innenverzahnung (6) des Hohlrads (2) hergestellt wird, indem der Innendurchmesser im Bereich des vorgelagerten Abschnitts (10) kleiner gewählt wird als der Durchmesser des Kopfkreises der Innenverzahnung (6) des Hohlrads (2).

8. Verfahren nach Anspruch 6 oder 7, **dadurch gekennzeichnet, dass** das Verstemmwerkzeug (4) einen konusförmigen Endabschnitt (9) mit einer zur Verzahnung (11) des vorgelagerten Abschnitts (10) passenden Außenverzahnung (8) aufweist, wobei das Verstemmwerkzeug (4) zum Verstemmen axial in das Hohlrad (2) eingeführt wird, und wobei das Material der Lasche (3) durch den konusförmigen Endabschnitt (9) beim Verstemmen radial nach Außen in die Verzahnung (11) des vorgelagerten Abschnitts (10) hinein verformt wird, sodass ein in Umfangsrichtung wirkender Formschluss zwischen den beiden Bauteilen (1, 2) hergestellt wird.

9. Verfahren nach einem der Ansprüche 1 bis 8, **dadurch gekennzeichnet, dass** die Ausnehmung (5) des zweiten Bauteils ein Freistich ist.

10. Verfahren nach einem der Ansprüche 1 bis 9, **dadurch gekennzeichnet, dass** die Lasche (3) ein hohlzylindrischer Vorsprung des ersten Bauteils (1) ist, die vorzugsweise beim Verstemmen über den gesamten Umfang in die Ausnehmung (5) des zweiten Bauteils (2) hineinverformt wird.

11. Verfahren nach einem der Ansprüche 1 bis 10, **dadurch gekennzeichnet, dass** das erste Bauteil (1) vor dem Verstemmen mit dem zweiten Bauteil (2) verschraubt wird.

12. Verfahren nach Anspruch 11 in Verbindung mit Anspruch 6, **dadurch gekennzeichnet, dass** ein zur Verschraubung dienendes Gewinde (12) des zweiten Bauteils (2) näher an dem zur Verbindung mit dem ersten Bauteil (1) vorgesehenen axialen Ende des zweiten Bauteils (2) liegt als der vorgelagerte Abschnitt (10) des zweiten Bauteils (2), wobei der Innendurchmesser des Gewindes (12) des zweiten Bauteils (2) größer ist als der Innendurchmesser des vorgelagerten Abschnitts (10).

13. Verfahren nach einem der Ansprüche 1 bis 12, **dadurch gekennzeichnet, dass** das Verstemmen mittels kraft-/wegüberwachter Presse ausgeführt wird.

14. Verfahren nach einem der Ansprüche 1 bis 13, **dadurch gekennzeichnet, dass** die form- und/oder kraftschlüssige Verbindung und die axiale Sicherung zwischen einem Motorflansch (1) des Motors und einem Hohlrad (2) des Getriebes hergestellt wird, so dass der Motorflansch (1) das erste Bauteil bildet und das Hohlrad (2) des Getriebes das zweite Bauteil bildet.

15. Baugruppe umfassend einen Motor und ein mit dem Motor verbundenes Getriebe, **dadurch gekennzeichnet, dass** die Verbindung zwischen Motor und Getriebe gemäß dem Verfahren nach einem der vorstehenden Ansprüche hergestellt ist.
